# EUROPÄISCHE PATENTSCHRIFT

(11) **EP 2 705 277 B1**
(45) Veröffentlichungstag und Bekanntmachung des Hinweises auf die Patenterteilung: **16.09.2015**
(21) Anmeldenummer: 12720104.4
(22) Anmeldetag: 30.04.2012
(51) Int. Cl.: F16H 57/04, F16H 1/02, F16H 61/688, F16D 25/12, F16D 48/02

(54) **DOPPELKUPPLUNGSGETRIEBE**
DUAL CLUTCH TRANSMISSION
BOÎTE DE VITESSES À DOUBLE EMBRAYAGE

(30) Priorität: 06.05.2011 DE 102011100849
(43) Veröffentlichungstag der Anmeldung: 12.03.2014
(73) Patentinhaber: Audi AG, 85045 Ingolstadt (DE)
(72) Erfinder: SCHULLER, Dietmar, 93336 Altmannstein (DE); AMMLER, Stefan, 86673 Bergheim (DE); HEROLD, Stephan, 85092 Kösching (DE)
(74) Vertreter: Wohnert, Dietmar
(86) Internationale Anmeldenummer: PCT/EP2012/001851
(87) Internationale Veröffentlichungsnummer: WO 2012/152397

(56) Entgegenhaltungen:
- EP-A1- 1 637 756
- EP-A2- 1 353 075
- WO-A1-2006/007086
- WO-A1-2009/111220
- DE-A1-102010 018 192

## Beschreibung

Die Erfindung betrifft ein Doppelkupplungsgetriebe, insbesondere eines Kraftfahrzeugs, mit einem Hydraulikkreis insbesondere zur Kühlung des Doppelkupplungsgetriebes, wobei der Hydraulikkreis wenigstens eine Pumpe zum Fördern eines Hydraulikmediumstroms, wenigstens einen Kühler zum Kühlen des Hydraulikmediumstroms und ein Volumensteuerventil zum Einstellen des Hydraulikmediumstroms für mindestens eine Kupplungen des Doppelkupplungsgetriebes zugeordnete Kühlung umfasst.

Doppelkupplungsgetriebe werden bevorzugt in Personenkraftwagen eingesetzt. Ein Doppelkupplungsgetriebe weist im Allgemeinen zwei koaxial zueinander angeordnete Getriebeeingangswellen auf, die jeweils einem Teilgetriebe zugeordnet sind. Jeder der Getriebeeingangswellen ist eine Kupplung zugeordnet, über die die Getriebeeingangswelle des jeweiligen Teilgetriebes kraftschlüssig mit dem Abtrieb eines Motors, vorzugsweise eines Verbrennungsmotors eines Kraftfahrzeugs, gekoppelt werden kann. Ein erstes der beiden Teilgetriebe umfasst typischerweise die ungeraden Gänge, während ein zweites der Teilgetriebe die geraden Gänge sowie den Rückwärtsgang umfasst.

Während der Fahrt ist typischerweise eines der Teilgetriebe aktiv, was bedeutet, dass die diesem Teilgetriebe zugeordnete Getriebeeingangswelle über die ihr zugeordnete Kupplung mit dem Motor gekoppelt ist. In dem aktiven Teilgetriebe ist ein Gang eingelegt, der eine momentane Getriebeübersetzung bereitstellt. Eine Steuerung ermittelt, ob abhängig von der Fahrsituation der nächst höhere oder nächst niedrige Gang eingelegt werden soll. Dieser voraussichtlich als nächstes verwendete Gang wird in dem zweiten, inaktiven Teilgetriebe eingelegt. Für einen Gangwechsel wird dann die Kupplung des inaktiven Teilgetriebes geschlossen, während die Kupplung des aktiven Teilgetriebes geöffnet wird. Bevorzugt wird, wenn sich das Öffnen der Kupplung des aktiven Teilgetriebes und das Schließen der Kupplung des inaktiven Teilgetriebes derart überschneiden, dass keine oder nur eine geringfügige Kraftflussunterbrechung vom Motor auf die Antriebswelle des Kraftfahrzeugs gegeben ist. In Folge des Gangwechsels wird das zuvor aktive Teilgetriebe inaktiv, während das zuvor inaktive Teilgetriebe zum aktiven Teilgetriebe wird. Anschließend kann in dem nun inaktiven Teilgetriebe der voraussichtlich als nächstes benötigte Gang eingelegt werden.

Das Ein- und Auslegen der Gänge erfolgt über Elemente, bevorzugt über Schaltschienen, die von Hydraulikzylindern, den sogenannten, vorstehend bereits genannten Schaltzylindern, betätigt werden. Die Hydraulikzylinder sind bevorzugt als doppeltwirkende Hydraulikzylinder, insbesondere Gleichlaufzylinder oder Differenzialzylinder, ausgebildet, sodass jedem Schaltzylinder vorzugsweise zwei Gänge zugeordnet sein können. Alternativ können auch einfach wirkende Hydraulikzylinder vorgesehen sein. Die Hydraulikzylinder, welche die Elemente, insbesondere Schaltschienen, betätigen, werden auch als Gangstellerzylinder bezeichnet. Ein als Gleichlaufzylinder ausgebildeter Gangstellerzylinder, dem insbesondere zwei Gänge zugeordnet sind, weist bevorzugt drei Schaltpositionen auf, wobei insoweit in einer ersten ein bestimmter Gang, in einer zweiten ein anderer, bestimmter Gang und in einer dritten keiner der beiden genannten Gänge eingelegt ist.

Auch die den beiden Teilgetrieben zugeordneten Kupplungen werden hydraulisch betätigt, also geschlossen beziehungsweise geöffnet. Es wird bevorzugt, dass die Kupplungen jeweils schließen, wenn sie mit Hydraulikdruck beaufschlagt werden, während sie geöffnet sind, wenn kein Hydraulikdruck anliegt, d.h., ein der jeweiligen Kupplung zugeordneter Hydraulikzylinder, der - wie vorstehend erwähnt - auch Kupplungszylinder genannt wird, druckentlastet ist.

Im Übrigen ist die Funktionsweise eines Doppelkupplungsgetriebes an sich bekannt, sodass hier nicht näher darauf eingegangen wird.

Der in den vorstehenden Absätzen beschriebene Aufbau und die dort erläuterte Funktionsweise gilt bevorzugt auch beim oder im Zusammenhang mit dem Gegenstand der Erfindung.

Wie bereits angedeutet, werden Doppelkupplungsgetriebe durch einen Hydraulikkreis sowohl gesteuert beziehungsweise geregelt als auch gekühlt. Dieser Hydraulikkreis, beziehungsweise Baugruppen davon, sowie damit verknüpfte Verfahren sind Gegenstand der Erfindung.

Üblicherweise wird die Kühlung der Kupplungen durch eine verbrennungsmotorisch angetriebene Konstantpumpe bedient. Für eine bedarfsgerechte Kupplungskühlung wird mindestens ein Steuer- beziehungsweise Regelventil verwendet. Dabei hängt die Genauigkeit des zur Kupplungskühlung benutzten Volumenstroms stark von dem verwendeten Steuer- beziehungsweise Regelventil ab. Üblicherweise wird das durch die Pumpe geförderte Hydraulikmedium durch einen Kühler gekühlt und anschließend einer den Kupplungen zugeordneten Kühlung zugeführt, sodass nur ein Kühlmedium-Volumenstrom für beide Kupplungen zur Verfügung steht. Die gemeinsame Kupplungskühlung verschlechtert dabei die Regelgüte der Kupplungen.

Aus der EP 1 637 756 A1 ist weiterhin ein System bekannt, bei dem den Kupplungen ein Volumensteuerventil vorgeschaltet ist, das in einer ersten Schaltstellung der einen Kupplung Schmiermittel und der anderen Kupplung Kühlmittel und in einer weiteren Schaltstellung der einen Kupplung Schmiermittel und der anderen Kühlmittel zuführt. Hier ist das Bedienen der Kupplungen mit Kühlflüssigkeit stets abhängig von der Schmierung der Kupplungen, wodurch sowohl die Kupplungskühlung als auch die Schmierung nicht optimal erfolgen kann.

Aus der gattungsgemäßen Offenlegungsschrift WO 2009/111220 A1 ist weiterhin ein Doppelkupplungsgetriebe mit einem Hydraulikkreis zur Kühlung bekannt, wobei der Hydraulikkreis eine Pumpe zum Fördern eines Hydraulikmediums, einen Kühler zum Kühlen des Hydraulikmediums und ein Volumensteuerventil zum Einstellen eines Hydraulikmediumstroms für mindestens eine Kupplungen des Doppelkupplungsgetriebes zugeordneter Kühlung umfasst, wobei das Volumensteuerventil als Schaltventil mit zwei Schaltstellungsbereichen ausgebildet ist.

Darüber hinaus ist es bei bekannten Volumensteuerventilen notwendig, diese zu kalibrieren, damit eine Steuervorgabe auch zu einem entsprechenden Zustand des Volumensteuerventils beziehungsweise zu einer gewünschten Verteilung/Freigabe eines oder mehrerer Hydraulikmediumströme führt. Gerade bei Magnetventilen wird durch eine Stromvorgabe die Schaltstellung bestimmt, wobei abhängig von der Höhe der Stromvorgabe sich die Stellung und damit die Hydraulikmedium-Menge einstellt. Die Kalibrierung derartiger Volumensteuerventile gestaltet sich jedoch aufwendig und entsprechend kostenintensiv.

Es ist somit die Aufgabe der Erfindung, ein Doppelkupplungsgetriebe zu schaffen, das auf einfache und kostengünstige Art und Weise eine verlässliche Bedienbarkeit des Volumensteuerventils und damit der Versorgung der Kühlung mit gekühltem Hydraulikmedium ermöglicht.

Die der Erfindung zugrundeliegende Aufgabe wird dadurch gelöst, dass das Volumensteuerventil als Schaltventil mit mindestens zwei Schaltstellungsbereichen derart ausgebildet ist, dass es in einem ersten Schaltstellungsbereich mit konstantem Durchströmungsquerschnitt den Hydraulikmediumstrom einer einer ersten der Kupplungen zugeordneten Kühlung und in einem zweiten Schaltstellungsbereich mit konstantem Durchströmungsquerschnitt einer einer zweiten der Kupplungen zugeordneten zweiten Kühlung zuführt, wobei der Gesamtschaltbereich des Schaltventils beziehungsweise Volumensteuerventils im Wesentlichen von den Schaltstellungsbereichen gebildet wird und nur ein schmaler Übergangsbereich zwischen benachbarten Schaltstellungsbereichen vorgesehen ist. Unter den Schaltstellungsbereichen mit konstantem Durchströmungsquerschnitt ist jeweils ein Betätigungsweg des Schaltventils zu verstehen, innerhalb dessen das Schaltventil betätigbar/verstellbar ist, ohne dass dabei das Durchströmungsvolumen beziehungsweise ein eingestellter Durchströmungsquerschnitt verändert wird. Mit anderen Worten kann das Schaltventil in dem jeweiligen Schaltstellungsbereich verlagert werden, ohne dass sich der Schaltzustand im Bezug auf die eingestellte Fluidverbindung verändert. Der Gesamtschaltstellungsbereich stellt dabei den Bereich dar, über welchen das Schaltventil insgesamt verstellbar ist. Der Gesamtstellungsbereich ist dabei unterteilt in die Schaltstellungsbereiche und den jeweils zwischen benachbarten Schaltstellungsbereichen liegenden Übergangsbereich. Erfindungsgemäß ist vorgesehen, dass der Übergangsbereich nur schmal ausgebildet ist, sodass die Schaltstellungsbereiche im Wesentlichen den Gesamtstellungsbereich bilden, sodass möglichst große Schaltstellungsbereiche vorliegen, innerhalb derer ein Betätigen des Schaltventils der Hydraulikmediumstrom nicht beeinflusst wird. Hierdurch wird erreicht, dass das Doppelkupplungsgetriebe im Bezug auf das Volumensteuerventil nicht kalibriert werden muss. Durch das Vorsehen der breiten Schaltstellungsbereiche wird gewährleistet, dass bei Vorgabe auch eines toleranzbehafteten Ansteuersignals und bei Vorliegen fertigungsbedingter Toleranzen des Schaltventils die gewünschte Schaltstellung des Schaltventils erreichbar ist. Dies wird dadurch gewährleistet, dass die Schaltstellungsbereiche größer als die zu erwartenden Toleranzen sind. Dadurch, dass das Schaltventil nicht das jeweilige Durchströmungsvolumen individuell einstellen kann, sondern lediglich ein Freigeben und Verschließen eine Verbindung ermöglichen soll, dass letztendlich also eine digitale Betätigung vorliegt, wird hierdurch auf besonders einfache und kostengünstige Art und Weise ein sicherer Betrieb des Doppelkupplungsgetriebe auch ohne eine vorherige Kalibrierung des Volumensteuerventils gewährleistet. Erfindungsgemäß ist der Übergangsbereich derart schmal ausgebildet, dass sich über den Gesamtschaltstellungsbereich des

Schaltventils ein nahezu konstanter Durchströmungsquerschnitt ergibt. Dies führt bei einem Umschalten dazu, dass keine Staudruckspitzen auftreten.

Unter einem Verstellen beziehungsweise Betätigen des Schaltventils ist stets ein Betätigen beziehungsweise Verstellen eines verlagerbaren Ventilelements des Schaltventils zu verstehen, das beispielsweise mit einer oder mehreren Durchströmungsöffnungen eines ortsfesten Gehäuses zusammenwirkt, um einen oder mehrere Durchströmungsquerschnitte freizugeben. Vorzugsweise handelt es sich bei dem Schaltventil um ein Schieberventil oder Drehschieberventil.

Gemäß einer vorteilhaften Weiterbildung der Erfindung ist vorgesehen, dass das Schaltventil als 4/3-Wege-Schaltventil oder als 3/2-Wege-Schaltventil ausgebildet ist. Das 3/2-Wege-Proportionalventil weist drei Anschlüsse und zwei Schaltstellungsbereiche mit einem schmalen Übergang auf, wobei ein erster Anschluss mit der Druckseite der Pumpe, ein zweiter Anschluss mit der ersten Kühlung und ein dritter Anschluss mit der zweiten Kühlung verbunden ist. Das 4/3-Wege-Schaltventil weist mindestens einen weiteren Anschluss und einen weiteren, dritten Schaltstellungsbereich auf, wobei der weitere Anschluss mit einer zu einem das Hydraulikmedium bereitstellenden Tank zurückführenden Leitung verbunden ist.

Vorzugsweise führt das Schaltventil als 4/3-Wege-Schaltventil also in einem dritten Schaltstellungsbereich den Hydraulikmediumstrom einem das Hydraulikmedium bereitstellenden Tank zu. Ist das Volumensteuerventil stromabwärts des Kühlers angeordnet, kann dadurch erreicht werden, dass durch Schalten des Schaltventils in seinen dritten Schaltstellungsbereich das Hydraulikmedium gekühlt und zurück in den Tank geführt wird, wodurch ein kleiner Kühlkreislauf zum Kühlen des in dem Tank befindlichen Hydraulikmediums erzeugt wird.

Vorzugsweise ist das Volumensteuerventil beziehungsweise das Schaltventil elektromotorisch und/oder elektromagnetisch ansteuerbar. Dazu ist dem Volumensteuerventil zweckmäßigerweise ein elektromotorischer und/oder elektromagnetischer Aktor zugeordnet. Hierdurch lässt sich das Volumensteuerventil genau und schnell in den gewünschten Schaltstellungsbereich bringen. Aufgrund der vorteilhaften Ausbildung des Schaltventils mit Schaltstellungsbereichen, innerhalb derer ein konstanter Durchströmungsquerschnitt vorliegt, stehen breite Strombereiche zur Verfügung, innerhalb derer das Schaltventil in die gewünschte Schaltstellung bringbar ist. Durch die breite Aufteilung der Strombereiche entfällt die Notwendigkeit der Kalibrierung, da die Strombereiche zum Schalten der Stellungen beziehungsweise Stellungsbereiche größer als die zu erwartenden Toleranzen sind.

Erfindungsgemäß ist die Pumpe mit einem insbesondere drehzahlgeregelten Elektromotor wirkverbunden. Durch die Ausbildung des Volumensteuerventils als Schaltventil fehlt zunächst die Möglichkeit, die Menge des Hydraulikmediumstroms zu beeinflussen. Durch das Vorsehen des Elektromotors kann die Leistung der Pumpe und somit das Fördervolumen und die daraus resultierende Menge an gefördertem Hydraulikmedium eingestellt werden, sodass zum Beeinflussen der Menge des Hydraulikmediumstroms bevorzugt der Elektromotor entsprechend angesteuert wird, insbesondere wird dessen Drehzahl entsprechend gesteuert beziehungsweise geregelt.

Bevorzugt ist zwischen der Pumpe und dem Elektromotor ein betätigbares Trennelement zwischengeschaltet. Zweckmäßigerweise ist dazu die Antriebswelle der Pumpe mit einer Abtriebswelle des Antriebs beziehungsweise des Elektromotors mittels des Trennelements wirkverbunden/wirkverbindbar. Bei dem Trennelement handelt es sich bevorzugt um eine betätigbare Kupplung oder um einen Freilauf. Durch Betätigen der Kupplung beziehungsweise durch Ändern der Drehrichtung lässt sich damit die Pumpe abschalten, um das Fördern des Hydraulikmediums zu unterbrechen.

Gemäß einer vorteilhaften Weiterbildung der Erfindung ist vorgesehen, dass der zweite Schaltstellungsbereich zwischen dem ersten Schaltstellungsbereich und dem dritten Schaltstellungsbereich liegt. Dadurch sind die den Kühlungen zugeordneten Schaltstellungsbereiche benachbart zueinander angeordnet, sodass durch eine getaktete Ansteuerung des Schaltventils die Kühlungen quasi gleichzeitig mit Hydraulikmedium versorgt werden können.

Gemäß einer alternativ bevorzugten Ausführungsform der Erfindung ist vorgesehen, dass der dritte Schaltstellungsbereich zwischen dem ersten Schaltstellungsbereich und dem zweiten Schaltstellungsbereich liegt. Hierdurch wird vermieden, dass bei einem getakteten Ansteuern des Schaltventils zum Einstellen eines gewünschten Hydraulikmediumstroms für nur eine der Kupplungen beziehungsweise Kühlungen auch zur anderen Kühlung Hydraulikmedium fließt. Stattdessen wird der beim getakteten, nicht zur jeweiligen Kühlung geführte Hydraulikmediumstrom in den Tank geleitet.

Weiterhin ist erfindungsgemäß vorgesehen, dass die der ersten und/oder der zweiten Kühlung zugeführte Menge des Hydraulikmediums durch ein getaktetes Ansteuern des Schaltventils und/oder durch Einstellen der Drehzahl des Elektromotors bestimmt wird.

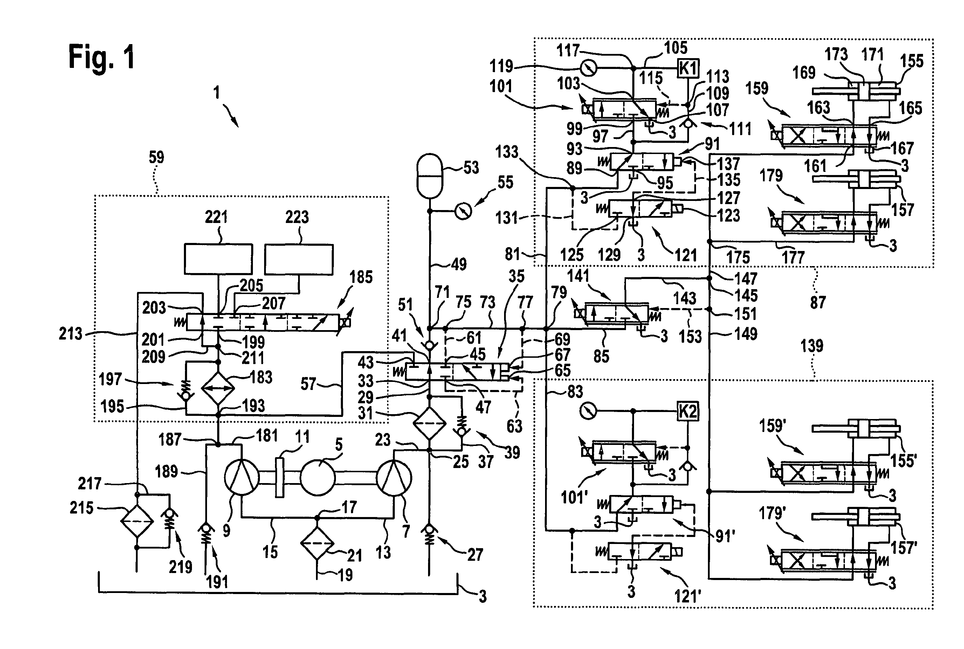

Im Folgenden wird der erfindungsgemäße Hydraulikkreis anhand von Figur 1 näher erläutert.

Figur 1 zeigt einen Hydraulikkreis 1, der der Betätigung, insbesondere dem Kuppeln sowie dem Ein- und Auslegen von Gängen, eines Doppelkupplungsgetriebes sowie dessen Kühlung dient. Der Hydraulikkreis 1 umfasst einen Tank 3, der insbesondere als Vorratsbehälter oder Sumpf für ein zur Betätigung und Kühlung verwendetes Hydraulikmedium dient, und in dem das Hydraulikmedium vorzugsweise drucklos gespeichert ist. Es ist ein Elektromotor 5 vorgesehen, der eine erste Pumpe 7 und eine zweite Pumpe 9 antreibt. Der Elektromotor 5 ist bevorzugt bezüglich seiner Drehzahl und Drehrichtung steuerbar, besonders bevorzugt regelbar. Die erste Pumpe 7 ist mit dem Elektromotor 5 fest verbunden, also ohne dass ein Trennelement vorgesehen ist. Dies bedeutet, dass die Pumpe 7 bei laufendem Elektromotor 5 stets angetrieben wird und Hydraulikmedium vorzugsweise in beiden Drehrichtungen gleichgerichtet fördert. Die Pumpe 9 ist bevorzugt über ein Trennelement 11 mit dem Elektromotor 5 verbunden. Es ist also möglich, die Pumpe 9 von dem Elektromotor 5 abzukoppeln, sodass sie nicht läuft, wenn der Elektromotor 5 läuft. Das Trennelement 11 ist vorzugsweise als Kupplung oder als Freilauf ausgebildet, wobei im zweiten Fall über die Drehrichtung des Elektromotors 5 bestimmt werden kann, ob von der Pumpe 9 Hydraulikmedium gefördert wird oder nicht.

Die erste Pumpe 7 und die zweite Pumpe 9 sind jeweils über eine Leitung 13, 15 mit einer Abzweigung 17 verbunden, in die eine weitere Leitung 19 mündet. Diese verbindet den Tank 3 über einen Saugfilter 21 mit der Abzweigung 17. Insgesamt sind damit Einlässe der Pumpen 7, 9 über die Leitungen 13, 15, die Abzweigung 17 und die den Saugfilter 21 aufweisende Leitung 19 mit dem Tank 3 verbunden.

Der Auslass der ersten Pumpe 7 ist mit einer Leitung 23 verbunden, die zu einer Abzweigung 25 führt. Die Abzweigung 25 ist über ein Druckbegrenzungsventil 27 mit dem Tank 3 verbunden. Das Druckbegrenzungsventil 27 kann bei Überdruck in Richtung des Tanks 3 öffnen. Außerdem geht von der Abzweigung 25 eine Leitung 29 aus, die über einen Druckfilter 31 zu einem Anschluss 33 eines Schaltventils 35 führt.

Der Druckfilter 31 ist durch einen Bypass 37 überbrückbar, wobei in dem Bypass 37 ein Differenzdruckventil 39 angeordnet ist, welches bei Überdruck eine Überbrückung des Filters 31 in Richtung auf den Anschluss 33 ermöglicht. Ein Öffnen des Differenzdruckventils 39 erfolgt ab einem vorgegebenen Differenzdruck über den Druckfilter 31.

Das Schaltventil 35 ist als 5/2-Wegeventil ausgebildet, welches außer dem Anschluss 33 vier weitere Anschlüsse 41, 43, 45, 47 aufweist. In einem ersten, in Figur 1 dargestellten Schaltzustand des Schaltventils 35 ist der Anschluss 33 mit dem Anschluss 41 verbunden, während die weiteren Anschlüsse 43, 45 und 47 blind, also geschlossen, geschaltet sind. Der Anschluss 41 mündet in eine Leitung 49, in der ein Rückschlagventil 51 angeordnet ist. Die Leitung 49 führt zu einem Druckspeicher 53, wobei vor dem Druckspeicher 53 eine Druckerfassungseinrichtung 55 mit der Leitung 49 hydraulisch verbunden ist.

In einem zweiten, aus der Figur 1 entnehmbaren Schaltzustand des Schaltventils 35 ist der Anschluss 33 mit dem Anschluss 43 verbunden, der in eine Leitung 57 mündet, die zu einem Hydraulikteilkreis 59 führt, der insbesondere der Kühlung von Kupplungen des Doppelkupplungsgetriebes dient. In diesem zweiten Schaltzustand ist der Anschluss 41 blind geschaltet und der Anschluss 45 ist mit dem Anschluss 47 verbunden. Dabei mündet in den Anschluss 45 eine Leitung 61, die mit dem Druck des Hydraulikmediums im Druckspeicher 53 beaufschlagt ist. Der Anschluss 47 mündet in eine Leitung 63, die mit einer ersten Ventilfläche 65 des Schaltventils 35 hydraulisch verbunden ist. Eine zweite Ventilfläche 67 des Schaltventils 35 ist über eine Leitung 69 permanent mit dem Druck des Druckspeichers 53 beaufschlagt.

Von der Leitung 49 zweigt an einer Abzweigung 71 eine Leitung 73 ab, von der wiederum in einer Abzweigung 75 die Leitung 61 und in einer Abzweigung 77 die Leitung 69 abzweigt. Die Abzweigung 71 ist auf der dem Schaltventil 35 abgewandten Seite des Rückschlagventils 51 an diesem angeschlossen.

Die Leitung 73 mündet in einer Abzweigung 79, von der Leitungen 81, 83 und 85 ausgehen.

Die Leitung 81 führt in einen Teilgetriebekreis 87 zur Versorgung eines ersten Teilgetriebes. Das erste Teilgetriebe weist eine Kupplung K1 auf. Die Leitung 81 mündet in einen Anschluss 89 eines Schaltventils 91, das als 3/2-Wegeventil ausgebildet ist, und als Sicherheitsventil für die Kupplung K1 dient. In einem ersten, dargestellten Schaltzustand des Schaltventils 91 ist der Anschluss 89 mit einem Anschluss 93 hydraulisch verbunden, während ein Anschluss 95 des Schaltventils 91 blind geschaltet ist. In einem zweiten, der Figur 1 entnehmbaren Schaltzustand des Schaltventils 91 ist der Anschluss 93 mit dem Anschluss 95 und über diesen mit dem Tank 3 verbunden, während der Anschluss 89 blind geschaltet ist. Wie im Folgenden deutlich wird, wird in diesem zweiten Schaltzustand die Kupplung K1 drucklos geschaltet.

Der Anschluss 93 ist mit einer Leitung 97 und über diese mit einem Anschluss 99 eines Druckregelventils 101 verbunden. Das Druckregelventil 101 ist als 3/2-Wege-Proportionalventil ausgebildet, das einen Anschluss 103 aufweist, der über eine Leitung 105 mit der Kupplung K1 verbunden ist. Das Druckregelventil 101 weist ferner einen Anschluss 107 auf, der mit dem Tank 3 verbunden ist. In einem ersten Extremalzustand des Druckregelventils 101 ist der Anschluss 99 mit dem Anschluss 103 verbunden, während der Anschluss 107 blind geschaltet ist. In diesem Fall wirkt der volle, in der Leitung 97 herrschende Druck des Hydraulikmediums auf die Kupplung K1. In einem zweiten Extremalzustand ist der Anschluss 103 mit dem Anschluss 107 verbunden, sodass die Kupplung K1 drucklos ist. Durch proportionale Variation zwischen diesen Extremalzuständen regelt das Druckregelventil 101 in an sich bekannter Weise den in der Kupplung K1 herrschenden Druck. Von der Kupplung K1 führt eine Leitung 109 über ein Rückschlagventil 111 zurück zur Leitung 97. Falls der Druck in der Kupplung K1 über den Druck in der Leitung 97 steigt, öffnet das Rückschlagventil 111, wodurch eine hydraulische Verbindung zwischen der Kupplung K1 über die Leitung 109 mit der Leitung 97 freigegeben wird. Von der Leitung 109 zweigt in einer Abzweigung 113 eine Leitung 115 ab, die den Druck in der Kupplung K1 als Regelgröße an das Druckregelventil 101 zurückgibt.

In der Leitung 105 ist eine Abzweigung 117 vorgesehen, durch die eine Druckerfassungseinrichtung 119 hydraulisch wirkverbunden ist. Auf diese Weise wird der in der Kupplung K1 herrschende Druck durch die Druckerfassungseinrichtung 119 erfasst.

Das Schaltventil 91 wird von einem Pilotventil 121 angesteuert. Dieses wird durch einen elektrischen Aktor 123 betätigt. Es ist als 3/2-Wegeventil ausgebildet und umfasst die Anschlüsse 125, 127 und 129. Der Anschluss 125 ist über eine Leitung 131 mit einer in der Leitung 81 vorgesehenen Abzweigung 133 verbunden. Der Anschluss 127 ist über eine Leitung 135 mit einer Ventilfläche 137 des Schaltventils 91 verbunden. In einem ersten, hier dargestellten Schaltzustand des Pilotventils 121 ist der Anschluss 125 blind geschaltet, während der Anschluss 127 mit dem Anschluss 129 und über diesen mit dem Tank 3 verbunden ist, wodurch die Ventilfläche 137 des Schaltventils 91 über die Leitung 135 drucklos geschaltet ist. Vorzugsweise nimmt das Pilotventil 121 diesen Schaltzustand ein, wenn kein elektrisches Steuersignal an dem Aktor 123 anliegt. In einem zweiten einnehmbaren Schaltzustand des Pilotventils 121 ist der Anschluss 125 mit dem Anschluss 127 verbunden, während der Anschluss 129 blind geschaltet ist. In diesem Fall wirkt der in der Leitung 81 herrschende Druck über die Abzweigung 133, die Leitung 131 und die Leitung 135 auf die Ventilfläche 137 des Schaltventils 91, wodurch dieses entgegen einer Vorspannkraft in seinen zweiten Schaltzustand geschaltet wird, in dem der Anschluss 93 mit dem Anschluss 95 hydraulisch verbunden ist, sodass die Kupplung K1 drucklos geschaltet wird. Vorzugsweise kann also durch elektrische Ansteuerung des Pilotventils 121 das Schaltventil 91 so betätigt werden, dass die Kupplung K1 drucklos geschaltet und damit geöffnet ist.

Die von der Abzweigung 79 ausgehende Leitung 83 dient der Versorgung einer Kupplung K2 eines Teilhydraulikkreises 139 eines zweiten Teilgetriebes. Die Ansteuerung der Kupplung K2 umfasst ebenfalls ein Schaltventil 91', ein Pilotventil 121' und ein Druckregelventil 101'. Die Funktionsweise ist die gleiche, die bereits in Zusammenhang mit der ersten Kupplung K1 beschrieben wurde. Aus diesem Grund wird auf die entsprechende Beschreibung zum Teilgetriebekreis 87 verwiesen. Die hydraulische Ansteuerung der Kupplung K2 entspricht derjenigen der Kupplung K1.

Die von der Abzweigung 79 ausgehende Leitung 85 ist mit einem Druckregelventil 141 verbunden, über das der Druck des Hydraulikmediums in einer Leitung 143 regelbar ist. Die Funktionsweise des Druckregelventils 141 entspricht vorzugsweise der Funktionsweise der Druckregelventile 101, 101', sodass hier eine erneute Beschreibung nicht notwendig ist. Die Leitung 143 ist mit einer Abzweigung 145 verbunden, von der eine Leitung 147 und eine Leitung 149 ausgehen. In der Leitung 149 ist eine Abzweigung 151 vorgesehen, von der eine Leitung 153 ausgeht, über die der in der Leitung 149 und damit der in der Leitung 143 herrschende Druck als Regelgröße an das Druckregelventil 141 zurückgegeben wird. Es ist offensichtlich, dass die Abzweigung 151 auch in den Leitungen 151 oder 147 vorgesehen sein kann.

Die Leitung 147 dient der Versorgung von Gangstellerzylindern 155 und 157 in dem Teilgetriebekreis 87, die als zwei doppelt wirkende Zylinder, also Gleichlaufzylinder, ausgebildet sind.

Zur hydraulischen Ansteuerung des Gangstellerzylinders 155 ist ein Volumensteuerventil 159 vorgesehen, das als 4/3-Wege-Proportionalventil ausgebildet ist. Es weist vier Anschlüsse 161, 163, 165 und 167 auf. Der erste Anschluss 161 ist mit der Leitung 147 verbunden, der zweite Anschluss 163 ist mit einer ersten Kammer 169 des Gangstellerzylinders 155 verbunden, der dritte Anschluss 165 ist mit einer zweiten Kammer 171 des Gangstellerzylinders 155 verbunden und der vierte Anschluss 167 ist mit dem Tank 3 verbunden. In einem ersten Extremalzustand des Volumensteuerventils 159 ist der erste Anschluss 161 mit dem zweiten Anschluss 163 verbunden, während der dritte Anschluss 165 mit dem vierten Anschluss 167 verbunden ist. In diesem Fall kann Hydraulikmedium von der Leitung 147 in die erste Kammer 169 des Gangstellerzylinders 155 fließen, während die zweite Kammer 171 über die Anschlüsse 165, 167 zum Tank 3 hin drucklos geschaltet ist. Auf diese Weise wird ein Kolben 173 des Gangstellerzylinders 155 in eine erste Richtung bewegt, um beispielsweise einen bestimmten Gang des Doppelkupplungsgetriebes aus- beziehungsweise einen anderen bestimmten Gang einzulegen.

In einem zweiten Extremalzustand des Volumensteuerventils 159 werden sowohl der Anschluss 163 als auch der Anschluss 165 mit dem Anschluss 167 verbunden, wobei der Anschluss 161 blind geschaltet wird. Auf diese Weise sind beide Kammern 169, 171 des Gangstellerzylinders 155 mit dem Tank 3 verbunden, sodass sie drucklos geschaltet sind. Der Kolben 173 des Gangstellzylinders 155 verharrt dann in seiner momentanen Position, weil keine Kräfte auf ihn wirken.

In einem dritten Extremalzustand des Volumensteuerventils 159 ist der Anschluss 161 mit dem Anschluss 165 verbunden und der Anschluss 163 mit dem Anschluss 167. In diesem Fall fließt Hydraulikmedium von der Leitung 147 in die zweite Kammer 171 des Gangstellenzylinders 155 und die erste Kammer 169 wird über den Anschluss 163 und den Anschluss 167 zum Tank 3 hin drucklos geschaltet. Das Hydraulikmedium übt dann eine Kraft auf den Kolben 173 des Gangstellerzylinders 155 derart aus, dass er in eine zur ersten Richtung entgegengesetzte zweite Richtung verlagert wird. Auf diese Weise kann der zuvor erwähnte bestimmte andere Gang aus- beziehungsweise der erwähnte bestimmte Gang eingelegt werden.

Wie bereits beschrieben, ist das Volumensteuerventil 159 als Proportionalventil ausgebildet. Der von der Leitung 147 kommende Hydraulikmedienstrom wird durch Variation der Ventilzustände zwischen den drei Extremalzuständen auf die Kammern 169, 171 aufgeteilt, sodass es möglich ist, durch Steuerung/Regelung des Volumenstroms eine definierte Geschwindigkeit für den Ein- beziehungsweise Auslegevorgang eines Gangs vorzugeben.

Von der Leitung 147 zweigt in einer Abzweigung 175 eine Leitung 177 ab, die in ein Volumensteuerventil 179 mündet, welches der Ansteuerung des Gangstellerzylinders 157 dient. Die Funktionsweise der hydraulischen Ansteuerung des Gangstellzylinders 157 ist die gleiche, die in Zusammenhang mit dem Gangstellerzylinder 155 beschrieben wurde. Eine erneute Beschreibung ist daher nicht notwendig.

Die Leitung 149 dient der Versorgung von Gangsstellerzylindern 155' und 157' des zweiten Teilgetriebes im Teilgetriebekreis 139. Auch zu deren Ansteuerung sind Volumensteuerventile 159' und 179' vorgesehen. Die Teilgetriebekreise 87 und 139 sind bezüglich der Ansteuerung der Gangsstellerzylinder 155, 155' beziehungsweise 157, 157' identisch ausgebildet, sodass auf die vorangegangene Beschreibung verwiesen wird.

Der Auslass der Pumpe 9 ist mit einer Leitung 181 verbunden, die zu dem Hydraulikteilkreis 59 führt, welcher vorzugsweise insbesondere der Kühlung der Kupplungen K1, K2 dient. Die Leitung 181 führt über einen Kühler 183 zu einem Volumensteuerventil 185. Hinter dem Auslass der Pumpe 9 und vor dem Kühler 183 ist eine Abzweigung 187 in der Leitung 181 vorgesehen, von der eine Leitung 189 abzweigt, die über ein in Richtung auf den Tank 3 öffnendes Druckbegrenzungsventil 191 zum Tank 3 führt. Hinter der Abzweigung 187 und vor dem Kühler 183 ist eine Abzweigung 193 vorgesehen, in die die Leitung 57 mündet, die von dem Schaltventil 35 kommt und mit dessen Anschluss 43 verbunden ist. Über die Leitung 57 ist es möglich, den Hydraulikteilkreis 59 mit von der Pumpe 7 gefördertem Hydraulikmedium zu versorgen, wenn sich das Schaltventil 35 in seinem zweiten Schaltzustand befindet. Außerdem zweigt von der Abzweigung 193 ein Bypass 195 ab, der ein Differenzdruckventil 197 aufweist und zum Kühler 183 parallel liegt. Das Differenzdruckventil 197 gibt bei Überdruck den Bypass in Richtung auf das Volumensteuerventil 185 frei. Auf diese Weise kann der Kühler 183 überbrückt werden.

Das Volumensteuerventil 185 ist als 4/3-Wege-Schaltventil ausgebildet, das Anschlüsse 199, 201, 203, 205 und 207 aufweist. Der Anschluss 199 ist mit der Leitung 181 über den Kühler 183 beziehungsweise das Differenzdruckventil 197 verbunden, ebenso wie der Anschluss 201, der über eine Leitung 209 und eine Abzweigung 211 mit der Leitung 181 verbunden ist. Die Anschlüsse 199 und 201 bilden also, da sie beide mit der Leitung 181 stromabwärts des Kühlers 183 verbunden sind, einen gemeinsamen Anschluss des Volumensteuerventils 185. Nur aus Übersichtlichkeitsgründen sind zwei Anschlüsse 199, 201 gezeichnet, tatsächlich ist jedoch nur ein Anschluss, beispielsweise 199 oder 201, für die Leitung 181 an dem Volumensteuerventil 185 vorgesehen, wobei gemäß einem alternativen Ausführungsbeispiel das Volumensteuerventil 185 auch tatsächlich mit den zwei getrennten Anschlüssen 199, 201 als 5/3-Wege-Schaltventil ausgebildet sein kann. Zum besseren Verständnis beziehen sich die folgenden Ausführungen auf die dargestellte Ausbildung, wobei zu berücksichtigen ist, dass es sich bei den Anschlüssen 199 und 201 eigentlich nur um einen Anschluss handelt, der entsprechend geschaltet wird. Der Anschluss 203 ist mit einer Leitung 213 verbunden, die über einen Druckfilter 215 zum Tank 3 führt. Der Druckfilter 215 ist durch einen Bypass 217 mit in Richtung auf den Tank 3 öffnendem Differenzdruckventil 219 überbrückbar.

Der Anschluss 205 des Volumensteuerventils 185 ist mit einer Kühlung 221 insbesondere für die erste Kupplung K1 verbunden. Der Anschluss 207 ist mit einer zweiten Kühlung 223 insbesondere für die zweite Kupplung K2 verbunden.

Die Anschlüsse des Schaltventils sind derart ausgebildet, dass sich mehrere Schaltstellungsbereiche ergeben, innerhalb derer der jeweils freigegebene Durchströmungsquerschnitt sich nicht ändert. In jedem der Schaltstellungsbereiche liegt somit ein konstanter Durchströmungsquerschnitt vor, sodass zum Betätigen des Schaltventils innerhalb des jeweiligen Schaltstellungsbereichs zu keiner Änderung an den Anschüssen 199, 201, 203, 205 und 207 führt. Vorzugsweise sind die Übergänge zwischen benachbarten Schaltstellungsbereichen nur schmal, insbesondere klein im Vergleich zur Weite der Schaltstellungsbereiche ausgebildet, sodass sich möglichst große Schaltstellungsbereiche im Bezug auf den Gesamtschaltbereich des Schaltventils ergeben. Dadurch kann eine gewünschte Schaltstellung des Schaltventils beziehungsweise des Volumensteuerventils 185 auch bei einer toleranzbehafteten elektrischen Ansteuerung und/oder bei Vorliegen von Toleranzen am Volumensteuerventil 185 sicher erreicht werden, ohne dass bei Inbetriebnahme zunächst eine Kalibrierung des Volumensteuerventils 185 erfolgen muss. Bevorzug ist über den Gesamtschaltstellbereich der Durchströmungsquerschnitt nahezu konstant ausgebildet.

In einem ersten Schaltstellungsbereich des Volumensteuerventils 185, wie es in Figur 1 angedeutet ist, ist der Anschluss 201 mit dem Anschluss 203 verbunden, während die Anschlüsse 199, 205 und 207 blind geschaltet sind. Der gesamte in der Hydraulikleitung 181 beziehungsweise durch den Kühler 183 strömende Hydraulikmedienstrom wird also über die Anschlüsse 201, 203 in die Leitung 213 und damit über den Druckfilter 215 in den Tank 3 geleitet.

In einem zweiten Schaltstellungsbereich sind die Anschlüsse 199 und 205 miteinander verbunden, während die Anschlüsse 201, 203 und 207 blind geschaltet sind. In diesem Zustand beziehungsweise in jeder Schaltstellung des Volumensteuerventils 185 innerhalb des zweiten Schaltstellungsbereichs wird der gesamte am Volumensteuerventil 185 ankommende Hydraulikmedienstrom der ersten Kühlung 221 zugeführt.

In einem dritten Schaltstellungsbereich des Volumensteuerventils 185 sind die Anschlüsse 199 und 207 miteinander verbunden. Die Anschlüsse 201, 203 und 205 sind blind geschaltet. In diesem Zustand beziehungsweise in jeder Schaltstellung des Volumensteuerventils 185 innerhalb des dritten Schaltstellungsbereichs wird demnach der gesamte in der Leitung 181 fließende Hydraulikmedienstrom der zweiten Kühlung 223 zugeführt.

Wie bereits ausgeführt, ist das Volumensteuerventil 185 als Schaltventil ausgebildet, sodass keine Zwischenzustände eingestellt werden können, wodurch der Volumenstrom zu den Kühlungen 221, 223 beziehungsweise zum Druckfilter 215 regelbar wäre. Es ist jedoch möglich, das Volumensteuerventil 185 getaktet zu betreiben, durch ein schnelles Hin- und Herschalten, also einem getakteten Betätigen des Volumensteuerventils 185, wobei jeweils kurzzeitig mindestens eine Schaltstellung innerhalb eines der drei Schaltstellungsbereiche eingenommen wird. Auch bei dieser Betriebsart wird im Zeitmittel der Volumenstrom gesteuert oder geregelt, der den Kühlungen 221, 223 beziehungsweise dem Druckfilter 215 und damit dem Tank 3 zugeleitet wird.

Die Figur 1 zeigt, dass zusätzlich zum in der Leitung 181 vorhandenen Hydraulikmediumstrom ein Hydraulikmediumstrom der Leitung 57 treten und dem Hydraulikteilkreis 59 zugeführt werden kann. Alternativ ist es auch möglich, dass nur die Leitung 57 Hydraulikmedium einspeist. Zu erwähnen ist noch, dass die Proportionalventile 101, 101', 141, 159, 159', 179, 179' jeweils insbesondere gegen Federkraft elektrisch proportional verstellbar sind.

Wie oben bereits ausgeführt, mündet die Leitung 57 in den Hydraulikteilkreis 59, genauer gesagt in die Leitung 181 stromabwärts der Pumpe 9. Gemäß einer alternativen, hier nicht dargestellten Ausführungsform mündet die Leitung 57 in die Leitung 181 bevorzugt stromabwärts des Kühlers 183. Durch die Zuführung des Hydraulikmediums aus dem Hochdruckkreis in den Hydraulikteilkreis 59 gemäß der alternativen Ausführungsform wird der Gesamtvolumenstrom durch den Kühler 183 reduziert. Durch den reduzierten Volumenstrom wird der Druckabfall über den Kühler 183 reduziert, wodurch die notwendige Antriebsenergie für die Pumpen 7 und/oder 9 verringert wird. Durch eine Reduktion der Rückstaudrücke wird also die für den Elektromotor 5 benötigte Antriebsenergie reduziert. Bei einer ausreichend hohen Reduktion der Rückstaudrücke beziehungsweise des Druckniveaus - unabhängig davon, wie die Reduktion erreicht wird - ist gemäß einer weiteren Ausführungsform vorgesehen, die Pumpe 9 mit dem Elektromotor 5 direkt zu verbinden, die dargestellte Trennkupplung 11 also zu entfernen.

Gemäß einer weiteren, hier nicht dargestellten Ausführungsform bezüglich der Anordnung des Druckfilters 215 ist vorgesehen, dass dieser nicht zwischen Volumensteuerventil 185 und Tank 3 in der Leitung 213, sondern vorzugsweise in der Leitung 181, insbesondere zwischen dem Kühler 183 und dem Volumensteuerventil 185, angeordnet ist. Vorzugsweise mündet dabei die Leitung 57 stromabwärts des Druckfilters 215 in die Leitung 181. Durch die alternative Anordnung des Druckfilters 215, der nunmehr im Hauptstrom des Hydraulikmediums liegt, werden die Zeitanteile erhöht, innerhalb derer das Hydraulikmedium durch den Druckfilter 215 gefiltert wird. Das Bypass-Ventil 219 wird dabei vorzugsweise auf einen minimalen Rückstaudruck über den Volumenstrom ausgelegt.

Alternativ zu der dargestellten und beschriebenen Ausführungsform des Volumensteuerventils 185 ist gemäß einer weiteren Ausführungsform vorgesehen, dass die Schaltstellungsbereiche derart vertauscht sind, dass in dem ersten Schaltstellungsbereich die Anschlüsse 199 und/oder 201 mit dem Anschluss 205 oder 207 verbunden und die übrigen Anschlüsse des Volumensteuerventils 185 blind geschaltet sind, in dem zweiten Schaltstellungsbereich die Anschlüsse 201 und/oder 199 mit dem Anschluss 3 verbunden und die übrigen Anschlüsse blind geschaltet sind, und in dem dritten Schaltstellungsbereich die Anschlüsse 199 und/oder 201 mit dem Anschluss 207 oder 205 verbunden und die übrigen Anschlüsse blind geschaltet sind. Durch ein derartiges Vertauschen der Schaltstellungen wird vermieden, dass bei einem getakteten Ansteuern des Volumensteuerventils 185 zum Einstellen eines gewünschten Hydraulikmediumstroms für eine der Kühlungen 221 oder 223 ein Volumenstrom auch zur anderen Kühlung 223 beziehungsweise 221 fließt. Stattdessen wird der beim getakteten, nicht zur jeweiligen Kühlung 221 oder 223 geführte Volumenstrom in den Tank 3 geleitet. Bei der tatsächlichen Ausbildung des Volumensteuerventils 185 als 4/3-Wege-Proportionalventil sind die Anschlüsse 199 und 201 stets als gemeinsamer beziehungsweise einziger Anschluss der Leitung 181 an dem Volumensteuerventil 185 zu verstehen, so dass tatsächlich nur einer der beiden Anschlüsse 199, 201 an dem Volumensteuerventil 185 vorgesehen ist.

### BEZUGSZEICHENLISTE

- 1: Hydraulikkreis
- 3: Tank
- 5: Elektromotor
- 7: erste Pumpe
- 9: zweite Pumpe
- 11: Trennelement
- 13: Leitung
- 15: Leitung
- 17: T-Stück
- 19: Leitung
- 21: Saugfilter
- 23: Leitung
- 25: Abzweigung
- 27: Druckbegrenzungsventil
- 29: Leitung
- 31: Druckfilter
- 33: Anschluss
- 35: Schaltventil
- 37: Bypass
- 39: Differenzdruckventil
- 41: Anschluss
- 43: Anschluss
- 45: Anschluss
- 47: Anschluss
- 49: Leitung
- 51: Rückschlagventil
- 53: Druckspeicher
- 55: Druckerfassungseinrichtung
- 57: Leitung
- 59: Hydraulikteilkreis
- 61: Leitung
- 63: Leitung
- 65: Ventilfläche
- 67: Ventilfläche
- 69: Leitung
- 71: Abzweigung
- 73: Leitung
- 75: Abzweigung
- 77: Abzweigung
- 79: Abzweigung
- 81: Leitung
- 83: Leitung
- 85: Leitung
- 87: Teilgetriebekreis
- 89: Anschluss
- 91: Schaltventil
- 91': Schaltventil
- 93: Anschluss
- 95: Anschluss
- 97: Leitung
- 99: Anschluss
- 101: Druckregelventil
- 101': Druckregelventil
- 103: Anschluss
- 105: Leitung
- 107: Anschluss
- 109: Leitung
- 111: Rückschlagventil
- 113: Abzweigung
- 115: Leitung
- 117: Abzweigung
- 119: Druckerfassungseinrichtung
- 121: Pilotventil
- 121': Pilotventil
- 123: elektrische Ansteuerung
- 125: Anschluss
- 127: Anschluss
- 129: Anschluss
- 131: Leitung
- 133: Abzweigung
- 135: Leitung
- 137: Ventilfläche
- 139: Teilgetriebekreis
- 141: Druckregelventil
- 143: Leitung
- 145: Abzweigung
- 147: Leitung
- 149: Leitung
- 151: Abzweigung
- 153: Leitung
- 155: Gangstellerzylinder
- 155': Gangstellerzylinder
- 157: Gangstellerzylinder
- 157': Gangstellerzylinder
- 159: Volumensteuerventil
- 159': Volumensteuerventil
- 161: Anschluss
- 163: Anschluss
- 165: Anschluss
- 167: Anschluss
- 169: Kammer
- 171: Kammer
- 173: Kolben
- 175: Abzweigung
- 177: Leitung
- 179: Volumensteuerventil
- 179': Volumensteuerventil
- 181: Leitung
- 183: Kühler
- 185: Volumensteuerventil
- 187: Abzweigung
- 189: Leitung
- 191: Druckbegrenzungsventil
- 193: Abzweigung
- 195: Bypass
- 197: Differenzdruckventil
- 199: Anschluss
- 201: Anschluss
- 203: Anschluss
- 205: Anschluss
- 207: Anschluss
- 209: Leitung
- 211: Abzweigung
- 213: Leitung
- 215: Druckfilter
- 217: Bypass
- 219: Differenzdruckventil
- 221: Kühlung
- 223: Kühlung
- K1: Kupplung
- K2: Kupplung

## Patentansprüche

1. Doppelkupplungsgetriebe, insbesondere eines Kraftfahrzeugs, mit einem Hydraulikkreis (1), insbesondere zur Kühlung des Doppelkupplungsgetriebes, wobei der Hydraulikkreis (1) wenigstens eine Pumpe (7, 9) zum Fördern eines Hydraulikmediumstroms, wenigstens einen Kühler (183) zum Kühlen des Hydraulikmediumstroms und ein Volumensteuerventil (185) zum Einstellen des Hydraulikmediumstroms für mindestens eine Kupplungen (K1, K2) des Doppelkupplungsgetriebes zugeordnete Kühlung (221, 223) umfasst, wobei das Volumensteuerventil (185) als Schaltventil mit mindestens zwei Schaltstellungsbereichen derart ausgebildet ist, dass es in einem ersten Schaltstellungsbereich mit konstantem Durchströmungsquerschnitt den Hydraulikmediumstrom einer einer ersten der Kupplungen (K1, K2) zugeordneten Kühlung (221, 223) und in einem zweiten Schaltstellungsbereich mit konstantem Durchströmungsquerschnitt den Hydraulikmediumstrom einer einer zweiten der Kupplungen (K2, K1) zugeordneten zweiten Kühlung (223, 221) zuführt, wobei ein Gesamtschaltstellungsbereich des Volumensteuerventils (185) im Wesentlichen von den Schaltstellungsbereichen gebildet wird und nur ein schmaler Übergangsbereich zwischen benachbarten Schaltstellungsbereichen vorgesehen ist, wobei der Übergangsbereich derart schmal ausgebildet ist, dass sich über den Gesamtschaltstellungsbereich des Schaltventils ein nahezu konstanter Durchströmungsquerschnitt ergibt, **dadurch gekennzeichnet, dass** die wenigstens eine Pumpe (7, 5) mit einem drehzahlgeregelten Elektromotor (5) wirkverbunden ist, und dass das Doppelkupplungsgetriebe derart ausgelegt ist, dass die der ersten und/oder der zweiten Kühlung (221, 223) zugeführte Menge des Hydraulikmediums durch ein getaktetes Ansteuern des Volumensteuerventils (185) und durch Einstellen der Drehzahl des Elektromotors (5) bestimmt wird.

2. Doppelkupplungsgetriebe nach Anspruch 1, **dadurch gekennzeichnet, dass** das Volumensteuerventil (185) als 4/3-Wege-Schaltventil oder als 3/2-Wege-Schaltventil ausgebildet ist.

3. Doppelkupplungsgetriebe nach einem der vorhergehenden Ansprüche, **dadurch gekennzeichnet, dass** das Volumensteuerventil (185) als 4/3-Wege-Schaltventil in einem dritten Schaltstellungsbereich den Hydraulikmediumstrom einem das Hydraulikmedium bereitstellenden Tank zuführt.

4. Doppelkupplungsgetriebe nach einem der vorhergehenden Ansprüche, **dadurch gekennzeichnet, dass** das Volumensteuerventil (185) elektromagnetisch und/oder elektromotorisch ansteuerbar ist.

5. Doppelkupplungsgetriebe nach Anspruch 1, **dadurch gekennzeichnet, dass** zwischen der Pumpe (9) und dem Elektromotor (5) ein betätigbares Trennelement (11) zwischengeschaltet ist.

6. Doppelkupplungsgetriebe nach Anspruch 3, **dadurch gekennzeichnet, dass** der zweite Schaltstellungsbereich zwischen dem ersten Schaltstellungsbereich und dem dritten Schaltstellungsbereich liegt.

7. Doppelkupplungsgetriebe nach Anspruch 3, **dadurch gekennzeichnet, dass** der dritte Schaltstellungsbereich zwischen dem ersten Schaltstellungsbereich und dem zweiten Schaltstellungsbereich liegt.

## Claims

1. Dual clutch transmission, in particular for a motor vehicle, comprising a hydraulic circuit (1), in particular for cooling the double clutch transmission, the hydraulic circuit (1) comprising at least one pump (7, 9) for conveying a hydraulic medium flow, at least one cooler (183) for cooling the hydraulic medium flow, and a volume control valve (185) for adjusting the hydraulic medium flow for at least one cooling system (221, 223) associated with clutches (K1, K2) of the double clutch transmission, the volume control valve (185), formed as a switching valve having at least two switching position ranges, being formed such that, in a first switching position range having a constant flow cross section, said volume control valve supplies the hydraulic medium flow to a cooling system (221, 223) associated with a first of the clutches (K1, K2), and, in a second switching position range having a constant flow cross section, supplies the hydraulic medium flow to a second cooling system (223, 221) associated with a second of the clutches (K2, K1), a combined switching position range of the volume control valve (185) being substantially formed by the switching position ranges and only a narrow transitional range being provided between adjacent switching position ranges, the transitional range being formed so as to be narrow so that a virtually constant flow cross section arises across the combined switching position range of the switching valve, **characterised in that** the at least one pump (7, 5) is operatively connected to a speed-controlled electric motor (5) and **in that** the double clutch transmission is designed such that the amount of hydraulic medium supplied to the first and/or the second cooling system (221, 223) is determined by phased triggering of the volume control valve (185) and by adjusting the speed of the electric motor (5).

2. Dual clutch transmission according to claim 1, **characterised in that** the volume control valve (185) is a 4/3-directional switching valve or a 3/2-directional switching valve.

3. Dual clutch transmission according to either of the preceding claims, **characterised in that**, in a third switching position range, the volume control valve (185), constructed as a 4/3-directional switching valve, feeds the hydraulic medium flow to a tank providing the hydraulic medium.

4. Dual clutch transmission according to any of the preceding claims, **characterised in that** the volume control valve (185) can be controlled electromagnetically and/or by an electric motor.

5. Dual clutch transmission according to claim 1, **characterised in that** an actuatable separation element (11) is interposed between the pump (9) and the electric motor (5).

6. Dual clutch transmission according to claim 3, **characterised in that** the second switching position range is located between the first switching position range and the third switching position range.

7. Dual clutch transmission according to claim 3, **characterised in that** the third switching position range is located between the first switching position range and the second switching position range.

## Revendications

1. Boîte de vitesses à double embrayage, en particulier d'un véhicule automobile, comprenant un circuit hydraulique (1), en particulier pour le refroidissement de la boîte de vitesses à double embrayage, dans laquelle le circuit hydraulique (1) comprend au moins une pompe (7, 9) pour acheminer un courant de milieu hydraulique, au moins un dispositif de refroidissement (183) pour refroidir le courant de milieu hydraulique et une soupape de commande de volume (185) pour régler le courant de milieu hydraulique pour au moins un refroidissement (221, 223) affecté aux embrayages (K1, K2) de la boîte de vitesses à double embrayage, dans laquelle la soupape de commande de volume (185) est conçue sous la forme d'une soupape de commutation avec au moins deux plages de positions de commutation de sorte que, dans une première plage de positions de commutation avec une section transversale de passage constante, elle achemine le courant de milieu hydraulique à un refroidissement (221, 223) affecté à un premier des embrayages (K1, K2) et que, dans une seconde plage de positions de commutation avec une section transversale de passage constante, elle achemine le courant de milieu hydraulique à un deuxième refroidissement (223, 221) affecté à un second des embrayages (K2, K1), dans lequel une plage de positions de commutation totale de la soupape de commande de volume (185) est formée sensiblement par les plages de positions de commutation et il est seulement prévu une plage de transition étroite entre les plages de positions de commutation voisines, dans lequel la plage de transition est conçue assez étroite pour que l'on obtienne une section transversale de passage presque constante sur la plage de positions de commutation totale de la soupape de commande, **caractérisée en ce que** la au moins une pompe (7, 5) est raccordée activement à un moteur électrique (5) dont la vitesse de rotation est réglée, et **en ce que** la boîte de vitesses à double embrayage est conçue en sorte que la quantité de milieu hydraulique acheminée au premier et/ou au second refroidissement (221, 223) soit déterminée par une commande synchronisée de la soupape de commande de volume (185) et par réglage de la vitesse de rotation du moteur électrique (5).

2. Boîte de vitesses à double embrayage selon la revendication 1, **caractérisée en ce que** la soupape de commande de volume (185) se présente sous la forme d'une soupape de commutation à 4/3 voies ou d'une soupape de commutation à 3/2 voies.

3. Boîte de vitesses à double embrayage selon l'une quelconque des revendications précédentes **caractérisée en ce que** la soupape de commande de volume (185) sous la forme d'une soupape de commutation à 4/3 voies dans une troisième plage de positions de commutation achemine le courant de milieu hydraulique à un réservoir apprêtant le milieu hydraulique.

4. Boîte de vitesses à double embrayage selon l'une quelconque des revendications précédentes, **caractérisée en ce que** la soupape de commande de volume (185) peut être commandée par voie électromagnétique et/ou électromotrice.

5. Boîte de vitesses à double embrayage selon la revendication 1, **caractérisée en ce qu'**un élément de séparation actionnable (11) est commuté entre la pompe (9) et le moteur électrique (5).

6. Boîte de vitesses à double embrayage selon la revendication 3, **caractérisée en ce que** la seconde plage de positions de commutation se situe entre la première plage de positions de commutation et la troisième plage de positions de commutation.

7. Boîte de vitesses à double embrayage selon la revendication 3, **caractérisée en ce que** la troisième plage de positions de commutation se situe entre la première plage de positions de commutation et la secondé plage de positions de commutation.
